# EUROPEAN PATENT APPLICATION

(11) **EP 1 732 284 A1**
(43) Date of publication of application: **13.12.2006**
(21) Application number: 05291225.0
(22) Date of filing: 07.06.2005
(51) Int. Cl.: H04L 29/06, H04Q 7/38, H04Q 7/32

(54) **An enhanced device and an enhanced method for ensuring continuity of communication in a communication network**

(71) Applicant: Axalto S.A., 92120 Montrouge (FR)
(72) Inventor: Nave, Guillaume, c/o Axalto S.A. I.P. Department, 92120 Montrouge (FR)
(74) Representative: Jacquot, Ludovic R. G.

(57) **Abstract**

A personal authenticating token (10) to be coupled with a hosting communication device (20), characterized in that said token stores a set of rescue commands (11) which consist in the token actuating communicating equipment of the hosting communication device in order to establish a connection with a communication network and bypassing a set of instructions of the hosting communication device (21) which usually actuate said communicating equipment of the hosting communication device.

## Description

The invention relates to personal authenticating tokens for communication, typically for wireless or mobile communication devices such as mobile phones or communicating PDAs.

More generally, this invention can be implemented with a communicating device for which the personal token ensures the connection security in a network.

As a typical example, SIM cards are currently implemented for mobile phone networks, as well as access cards are implemented for internet connections. These cards have well known security functionalities.

During the startup of a mobile phone, the communication comes typically from a remote server to the mobile and then from the mobile to the SIM. The mobile device interprets network commands and sorts these commands to address the SIM card when needed. So when the mobile software functionality is partially or totally broken, the mobile cannot connect to the network.

This could especially happen while smart phones are becoming common and users may have rights to install new applications on these products like on the current PCs.

The purpose of the invention is to provide to any operator (owner of the SIM card) a way to certify that its customers will be able to start their mobile and connect to the network even in the case when the mobile has been harmed by a software virus.

This purpose is achieved by means of the invention as recited in the appended claims.

Additional aspects and advantages, as well as altemates of the invention will become apparent upon reading the following detailed description and upon reference to the accompanying drawings as announced hereafter.

Figure 1 illustrates commands which are exchanged between a SIM card, a mobile phone, and a remote server according to the prior art.

Figure 2 illustrates commands which are exchanged between a SIM card, a mobile phone and a remote server according to a preferred embodiment of the invention.

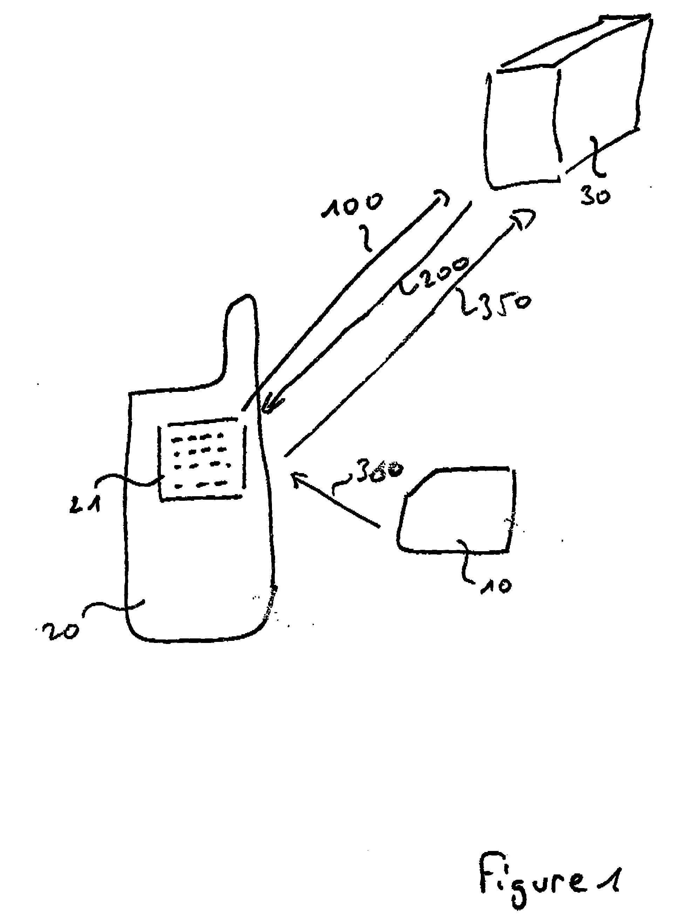

The system illustrated on figure 1 comprises a SIM card 10, a smart phone 20, and a remote server 30.

The usual functionalities of the card 10 and the mobile 20 comprise performing the following steps while starting up a communication session.

The mobile 20 is known as the master for establishing the communication with the remote server 30. Once the mobile 20 is turned on and activated for establishing a session, a starting program 21 is run in mobile 20 which attempts to find a GSM network in the area.

To this end, the program gets in touch with the radio components of the mobile phone through commands associated with necessary parameters identifying such components. The mobile sends messages to the searched network (step 100) until the card obtains a response informing it that a network has been found (step 200).

Once the network is found, the program then attempts to authentify the user on the network (step 300). To this end, the program questions the SIM card 10 for obtaining for example a pair of credentials such as SRES and Kc in the case of a GSM network.

These credentials are then sent to the network which will check them in server 30 and will accept or not the opening of a connection. In case of a negative response, another network is searched and the same steps are performed until the communication session is established.

The card comprises a detecting software element for detecting an incidental disablement of the mobile handset. In the present case a lack of response from the handset to a start-up actuation from the card is detected by the card.

In case the usual software functionalities of the phone are disabled, the card according to the invention therefore detects such disablement and performs a rescue process which will now be described.

In response to disablement of the mobile 20, the card 10 is able to establish directly a communication with the network, i.e. remote server 30 by controlling the mobile 20 without executing the usual start-up software code which is embedded in the mobile handset and which may be the disabled part of the mobile handset.

As well known in the art, the SIM card 10 includes a microprocessor which is able to run a set of commands and which deliver to the handset some responses and orders which will be interpreted by the handset 20 as determining further actions inside the handset.

In the present case, the card 10 embeds a memorized rescue set of commands 11 which is also run by the microprocessor of the card and which is directed here to the radio equipment 22 of the mobile handset 20.

The radio equipment 22 of the card mainly consists in some hardware components. The radio equipment 22 typically includes one or several electronic circuits in the form of printed circuits, which circuits are coupled with a radio antenna.

Such hardware part of the radio equipment 22 may be associated with a driver, i.e. a piece of software processed by the handset, which driver translates a set of simple instructions into power signals to the hardware radio elements. Such instructions typically come from the operating system of the handset. Such driver may be an API as will be explained hereafter in the framework of an alternate embodiment of the invention.

The rescue set of commands 11 of the card is mainly divided into two parts. The first part of the rescue set of commands 11 sends direct orders to the radio equipment 22 of the phone, in the present embodiment directly to the hardware elements of the radio equipment, i.e. to circuits associated to the antenna.

These direct orders from the card 10 to the radio equipment 22 of the handset command the radio equipment 22 into emitting a series of messages to the network which messages are similar as though the radio equipment was still under control of the mobile handset.

The first part of the rescue set of commands 11 in the card 10 therefore induces the radio equipment 22 into sending the necessary messages for obtaining a positive response from an available radio network.

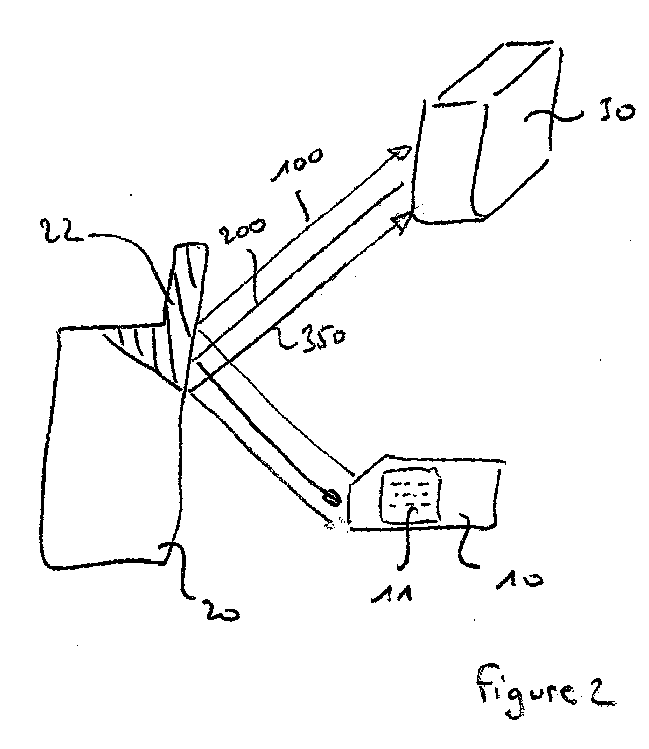

On figure 2, the rescue set of commands 11 require the sending of such messages at step 100 to a possible network represented by server 30, said messages being responded positively by the network in case such network is available (step 200).

Once a positive response is retrieved by the card 10, the second part of the rescue set of commands 11 consists in commanding authentication of the user in the network. The card 10 therefore monitors a reaction of the radio equipment 22 to a likely reception of some key challenge message from the network.

This way, the set of commands 21 of the mobile handset is no more necessary for transferring such key challenge to the card 10 as the rescue set of commands takes control of the emission and reception of radio signals from and into the mobile handset.

Once such a key challenge is received, the card 10 analyses such key challenge. The card processes a response to the key challenge, which response typically consists in a SRES / Kc couple obtained with the private key stored in the card. Such response is also called a set of credentials. The rescue set of commands 11 thereafter transfers such response to the radio equipment 22 of the handset and triggers the sending of this result to the network (step 350).

The user is thereby identified by the network and a communication session can be established or some SMS can be sent.

Once connection is established, the operator is allowed to propose a recovery of the mobile use by downloading over the air a replacement software equipement 22 for the mobile be re-abilitated to manage a start-up of a new communication. The operator for examples provides an OS patch to correct virus infection, and to achieve full reinstallation of the mobile OS. A loader piece of software, i.e. a piece of software which facilitates further loading of the operating system, can also be downloaded into the memory of the handset.

Reactivation of the mobile loader may also be performed as part of the rescue solution for downloading the operating system of the mobile handset and thereby preparing a further connection of the customer to the network in a usual fashion.

In the present case, the rescue set of commands 11 takes benefit from the established connection sessions to notify the network that the mobile handset 20 is disabled and requires a maintenance operation for example a new software layer to be installed therein. Said new software layer or any other maintenance operation is here performed on the phone by over the air communication as a preferable embodiment.

Card 10 therefore replaces mobile handset 20 as to its functionalities for starting up connection to the network, thereby allowing such connection even when the starting up software elements of the handset 20 are disabled.

In such a configuration, the SIM card communicates directly with the mobile radio components in order to establish a direct communication channel with the network. This way, the card 10 becomes a kind of rescue boot for the mobile.

Start-up software layer 21 of the mobile handset 20 is represented on figure 2, which is bypassed during establishment of this communication.

Such software layer 21 comprises software elements which may be infested by a virus or more generally which may be broken or bugged as a reason for the disablement of the mobile 20. Such bypassed software layer 21 comprises typically the operating system of the smart phone which is likely to be infested.

Card 10 takes benefit from such bypass of software layer 21 to access the remote server 30 and thereby connect the user to the network.

To be able to perform such connection to the network by using mainly the hardware equipment of the phone, the usual software functionalities performed by the phone for establishing the connection are now performed by the card.

The rescue set of instructions of the card is preferably stored in its non volatile memory (for example the EEPROM) or in the ROM part of its memory (Random Access Memory).

Such rescue functionality is all the more advantageous as the card constitutes by nature a protected entity which is non accessible to any third party.

Even if a virus infects the mobile device, the user should be able to startup and connect to the network by commanding the non infested resources of the phone with the only resources of the smart card.

On the contrary the operating systems which are currently being placed in the handsets are typically of the open type in order to allow applications to be easily installed on the handset virus applications can be designed for de-assembling the operating system and bypassing some particular check operations, thereby introducing bugs in the functionalities of the handset.

The software content of the card is neither visible nor accessible from the exterior of the card, which ensures that the set of rescue commands is protected against viruses. For this reason, placing such rescue set of commands in the card provides the necessary reliability for a rescue connection to the network.

As discussed here above, an altemate embodiment takes benefit from a low amount of applications (APIs) which are initially present in the mobile handset 20, which are preferably protected from virus attacks, and which use to interface between the microprocessor of the handset and the hardware radio elements.

In such a case where the mobile phone includes such kind of API, the rescue set of commands of the card preferably commands such API in the case of a rescue, thereby taking benefit from the functionalities of such API, i,e. thereby using commands which are interpreted by usual software, without any need for commands particularly adapted for hardware components which may vary from one handset manufacturer to the other.

Such an API may also constitute the unified entrance point on the side of the handset for commands which are directed to several different hardware equipments such as different circuitries for a given antenna.

Such kind of API is protected against viruses in an easier way than the start-up software as part of the usual OS.

In a particular embodiment, the rescue set of commands which is stored in the card will be specifically placed in the card once the hosting handset has been identified.

For example, the rescue set of commands is downloaded in the card 10 over the air after the card has been inserted in the handset 20, for example via a series of hidden SMSs. Such downloading can occur automatically each time a new handset is associated with the current card 10. Flash memory cards are particularly adapted for being downloaded or updated over the air as to such rescue set of commands. In a particular embodiment, a special API may be installed in the mobile and is defined to allow the use of the mobile functionalities from extemally, i.e. from the SIM card in the present example. Such API may be standardized as the API would not depend on the mobile in which the smart card is located so that a card can perform the rescue boot process with any associated mobile handset.

## Claims

1. A personal authenticating token (10) to be coupled with a hosting communication device (20), **characterized in that** said token stores a set of rescue commands (11) which consist in the token actuating communicating equipment of the hosting communication device in order to establish a connection with a communication network (30) and bypassing a set of instructions (21) of the hosting communication device which usually actuate said communicating equipment (22) of the hosting communication device.

2. The personal authenticating token according to claim 1, **characterized in that** said token (10) is a mobile phone token and the actuated communicating equipment of the hosting communication device comprises hardware radio equipment.

3. The personal authenticating token according to claim 1 or claim 2, **characterized in that** said rescue set of commands in the token (10) actuates at least an application stored in the hosting communication device and uses said application for actuating the communicating equipment of the hosting communication device.

4. A communicating system comprising a communication device and a personal authenticating token (10) hosted in the communication device (20), the hosting communication device comprising communicating equipment (22) and a set of commands (21) which currently actuate said communicating equipment **characterized in that** said token stores a rescue set of commands (11) which actuate the communicating equipment of the hosting communication device in replacement to said set of commands of the communication device.

5. The communicating system according to claim 4, **characterized in that** said hosting communication device is a mobile device and the actuated communicating equipment (20) of the hosting communication device comprises hardware radio equipment.

6. The communicating system according to claim 5, **characterized in that** the radio equipment (22) includes hardware equipment and at least an application which performs a handling of the hardware equipment under control of said set of commands of the mobile device or under the control of the rescue set of commands which is stored in the card.

7. A method for ensuring continuity of communication in a communication network comprised of a float of communication devices (20) and a float of authenticating tokens (10) hosted in said communication devices, each communication device embedding a set of instructions (21) for actuating communicating equipment of the communication device, **characterized in that** said method comprises the step which consists in storing in an authenticating token a rescue set of instructions (11) which is able to bypass said set of instructions of the associated hosting communication device in case such set of instructions of the hosting communication device (20) is disabled.

8. The method according to claim 7, **characterized in that** said hosting communication device is a mobile device and the actuated communicating equipment of the hosting communication device (20) comprises hardware radio equipment.

9. The method according to claim 7 or claim 8, **characterized in that** it includes the step of downloading said rescue set of instructions (11) in the token once the authenticating token is hosted by the hosting communication device through the communication network.

10. The method according to claim 9, **characterized in that** it includes the step consisting in sending to the network some references identifying a technical type of said hosting communication device (20) and the downloading step consists in downloading a rescue set of instructions which is adapted to said technical type of said hosting communication device.

11. The method according to anyone of claims 7 to 10, **characterized in that** it comprises the additional step which consists in establishing a connection to the network by running the rescue set of instructions and the step which consists in performing a maintenance operation on the hosting communication device (20) through the network.

12. The method according to claim 11, **characterized in that** said maintenance operation on the hosting communication device consists in downloading a set of commands into the hosting communication device (20) which replaces a disabled set of commands of the hosting communication device.
